# FASCICULE DE BREVET EUROPEEN

(11) **EP 1 986 827 B1**
(45) Date de publication et mention de la délivrance du brevet: **08.05.2013**
(21) Numéro de dépôt: 07704648.0
(22) Date de dépôt: 19.02.2007
(51) Int. Cl.: B26F 3/04

(54) **SECTIONNEUR PYROTECHNIQUE A CHARGE CREUSE ANNULAIRE POUR PIECES DE SECTION CIRCULAIRE**
PYROTECHNISCHES SCHNEIDWERKZEUG MIT RINGFÖRMIGER HOHLLADUNG FÜR RUNDE QUERSCHNITTVORRICHTUNGEN
PYROTECHNICAL CUTTER WITH ANNULAR HOLLOW CHARGE FOR CIRCULAR CROSS-SECTION DEVICES

(30) Priorité: 20.02.2006 FR 0650586
(43) Date de publication de la demande: 05.11.2008
(73) Titulaire: Commissariat à l'Énergie Atomique et aux Énergies Alternatives, 75015 Paris (FR)
(72) Inventeur: DELEIGNIES, Mathieu, 59290 Wasquehal (FR)
(74) Mandataire: Ilgart, Jean-Christophe
(86) Numéro de dépôt international: PCT/EP2007/051572
(87) Numéro de publication internationale: WO 2007/096335

(56) Documents cités:
- EP-A2- 0 014 400
- DE-C1- 2 852 359
- DE-C1- 3 611 903
- FR-A- 2 106 860
- FR-A1- 2 464 778
- US-A- 2 185 303
- US-A- 2 920 532
- US-A- 3 036 522
- US-A- 3 089 417

## Description

### Domaine de l'invention

L'invention concerne le domaine du cisaillage de pièces de section circulaire, notamment de câbles, en particulier par utilisation de charges pyrotechniques du type charge creuse, les pièces de section circulaire étant mobiles en défilement ou fixes. Un dispositif similaire, comprenant des caractérisistiques du préambule de la revendication 1 est décrit par le US-A- 3089417.

### Art antérieur et problème posé

De nombreuses situations nécessitent le sectionnement d'un câble pour libérer des dispositifs ou des charges. Les activités navales civiles ou militaires ont donné lieu à des développements de dispositifs particuliers mais le besoin peut apparaître dans toute activité utilisant des câbles pour maintenir, déplacer ou tracter des charges lourdes. Il peut s'agir, par exemple, d'architecture, de travaux de construction et de démolition, d'activités de forage, de transport terrestre ou maritime, de pêche au chalut, de libération de mines marines immergées, etc. Pour des raisons de sécurité, il est souhaitable d'effectuer le découpage à distance, afin d'éviter les accidents lors de la libération du câble. Il est aussi souhaitable de ne pas produire d'effets collatéraux trop importants sur le milieu environnant. Dans certains cas, le sectionnement du câble est une manoeuvre de sécurité. Elle doit s'effectuer avec des personnes présentes à proximité immédiate.

Il est connu d'utiliser des sectionneurs techniques pour cisailler des câbles. En effet, la demande de brevet français FR-2 464 778 décrit une cisaille pyrotechnique à charge creuse diédrique, c'est-à-dire en forme de dièdre, destinée notamment à sectionner, sous l'eau, c'est-à-dire de manière immergée, des éléments allongés métalliques, tels que des câbles, des barres, des chaînes ou des orins de mines marines. Un tel appareillage comprend principalement au moins une charge creuse diédrique et un dispositif de fixation de la cisaille sur l'élément à sectionner. Par contre, la masse d'explosif utilisée est importante et il est nécessaire de s'éloigner à une grande distance pour ne pas être blessé.

Les brevets FR 2 106 860 et FR 2 464 778 utilisent une paire des charges creuses diédriques entourant le câble. Elles sont disposées en regard l'une de l'autre dans le premier cas et forme un vé dans le second dispositif. Cette amélioration permet de réduire la masse d'explosif, mais il est impossible qu'une personne se trouve à proximité pendant le fonctionnement. Par ailleurs, toutes ces charges doivent être positionnées au contact du câble à l'aide de pièces de serrage. Elles ne peuvent pas être utilisées sur un câble en défilement.

Le but de l'invention est de proposer un sectionneur pyrotechnique à charge creuse permettant de sectionner un câble sans être en contact avec celui-ci. L'invention peut alors être installée aussi bien sur un câble statique que sur un câble en défilement. Dans ce cas, elle pourra être installé au préalable, laissant le câble libre, et ne sera déclenchée que lorsque la situation le nécessite en particulier pour des raisons de sécurité. Un autre but est de proposer un sectionneur à charge creuse dont la forme est optimisée pour réduire la masse d'explosif afin d'être utilisable avec des personnes à proximité.

### Résumé de l'invention

L'objet principal de l'invention est donc un sectionneur pyrotechnique de pièces de section circulaire au moyen d'une charge creuse selon la revendication 1 et comportant entre autres :
- une charge creuse ayant une forme partiellement annulaire, c'est-à-dire en un arc de cercle, de manière à entourer partiellement la pièce de section circulaire à sectionner. Ainsi, le sectionnement se fait sur une grande partie de la surface de celle-ci. De plus, elle a une section transversale en vé ;
- des moyens d'amorçage de la charge creuse ; et
- des moyens de positionnement de la pièce de section circulaire à sectionner par rapport à la charge creuse.

Selon l'invention, pour améliorer l'efficacité du sectionnement de la pièce de section circulaire, il est prévu que le point de focalisation du jet de charge creuse soit placé juste en dessous du point le plus bas des surfaces des moyens de positionnement sur lequel doit être posé la pièce de section circulaire, de manière à être placé juste en dessous du point le plus bas de la section droite de la pièce à section circulaire à découper.

Une réalisation principale de l'invention prévoit que le profil de la charge creuse a une forme variable, telle que sa section est plus importante au centre de l'arc de cercle et diminue en allant vers les extrémités. .

Une réalisation préférentielle de l'invention prévoit d'utiliser un conformateur d'onde, entre les moyens d'amorçage et le revêtement de la charge creuse.

Ce conformateur d'onde peut présenter plusieurs formes dont une forme trapézoïdale, le petit côté du trapèze étant placé vers le revêtement de la charge creuse et une forme hexagonale aplatie.

Dans la réalisation envisagée, l'angle de l'arc de cercle décrit par la charge creuse est compris entre 20 et 180°.

Dans la réalisation préférentielle du sectionneur selon l'invention, les moyens d'amorçage sont constitués d'au moins un détonateur placé directement sur la charge creuse dans une enveloppe de confinement à l'intérieur de laquelle est placée la charge creuse.

### Liste des figures

L'invention et ses différentes caractéristiques techniques seront mieux comprises à la lecture de la description détaillée d'une réalisation de l'invention, accompagnée de trois figures qui représentent respectivement :
- figure 1, en vue cavalière, des éléments du sectionneur dans son principe ;
- figure 2, en coupe frontale, la même partie du sectionneur ;
- figure 3, en coupe latérale, les mêmes éléments du sectionneur ;
- figure 4, une courbe représentant la quantité de matière à traverser pour le jet du revêtement de la charge creuse dans le sectionneur ;
- figure 5, en coupe, un détail d'une réalisation, utilisant un conformateur d'onde ;
- figures 6, 6A, 6B, en coupe, un détail d'une autre réalisation du sectionneur ;
- figure 7, en vue cavalière, la réalisation principale d'une application du sectionneur à un câble fixe ;
- figure 8, cette même application en coupe latérale ;
- figure 9, la même application, en coupe frontale ;
- figure 10, en vue cavalière, le sectionneur selon l'invention;

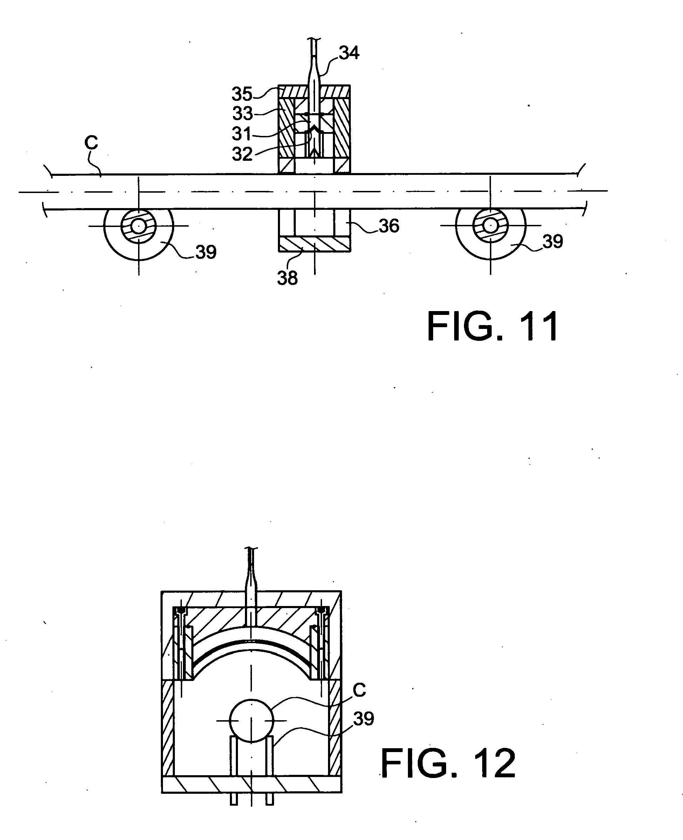

- figure 11, en coupe frontale, ce même sectionneur selon l'invention ; et
- figure 12, en coupe latérale, ce sectionneur selon l'invention.

### Description détaillée de deux réalisations de l'invention

On entend par charge creuse, dans la présente description, l'ensemble de l'explosif 1 revêtu du revêtement 2.

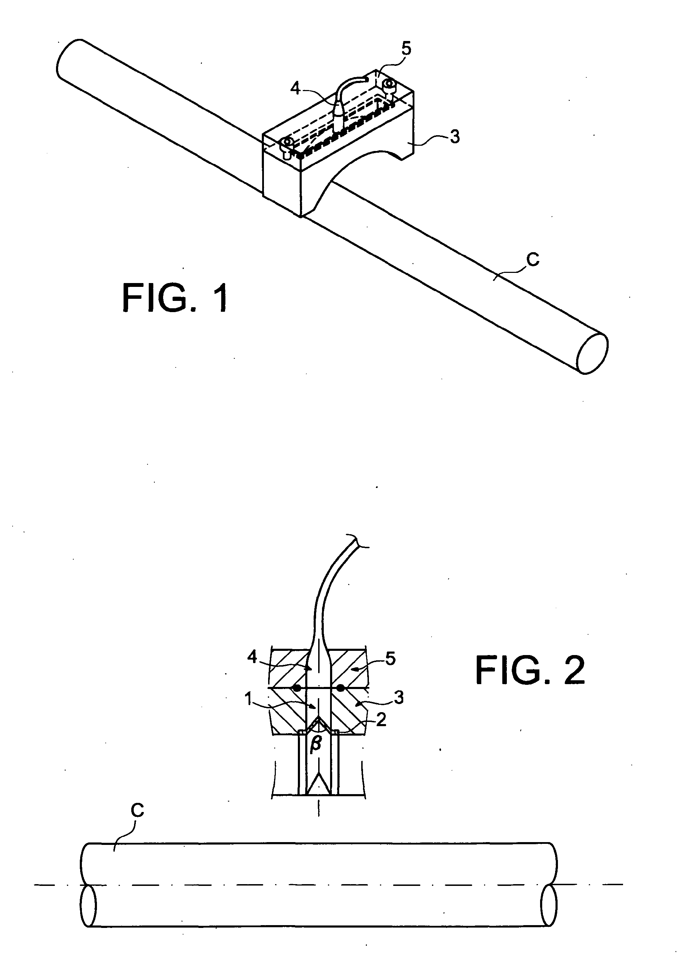

La figure 1 montre, en vue tridimensionnelle, c'est-à-dire cavalière, le principe du sectionneur. Une pièce à section circulaire C, à savoir un câble à sectionner y figure, de même qu'un élément du sectionneur, à savoir une enveloppe de confinement 3 à l'intérieur de laquelle est placé un explosif, non représenté, et un couvercle 5 placé au-dessus de l'enveloppe de confinement 3. Un détonateur 4 (on peut en prévoir deux) est également représenté au milieu et au-dessus du couvercle 5 et constitue l'élément principal des moyens d'amorçage du sectionneur. Il est destiné à provoquer la détonation de l'explosif. On entend par charge creuse, dans la présente description, l'ensemble de l'explosif 1 revêtu du revêtement 2.

La figure 2 montre un peu plus en détail ces éléments. En effet, on y distingue bien le détonateur 4 installé au milieu du couvercle 5 et en contact avec un explosif 1 placé lui-même au milieu de l'enveloppe de confinement 3. On note que l'extrémité inférieure de l'explosif est en forme concave en vé. Contre cette surface en vé, est placé un revêtement 2 destiné à constituer le futur projectile. En effet, l'explosion du matériau explosif 1, concentré par la forme en vé sur toute la surface du revêtement 2, lui-même en forme de vé, provoquera la fusion instantanée de ce dernier et un jet compact rassemblé sur l'axe de symétrie du vé.

La pièce de section circulaire C à sectionner montrée positionnée en dessous de cet ensemble, en regard du revêtement 2.

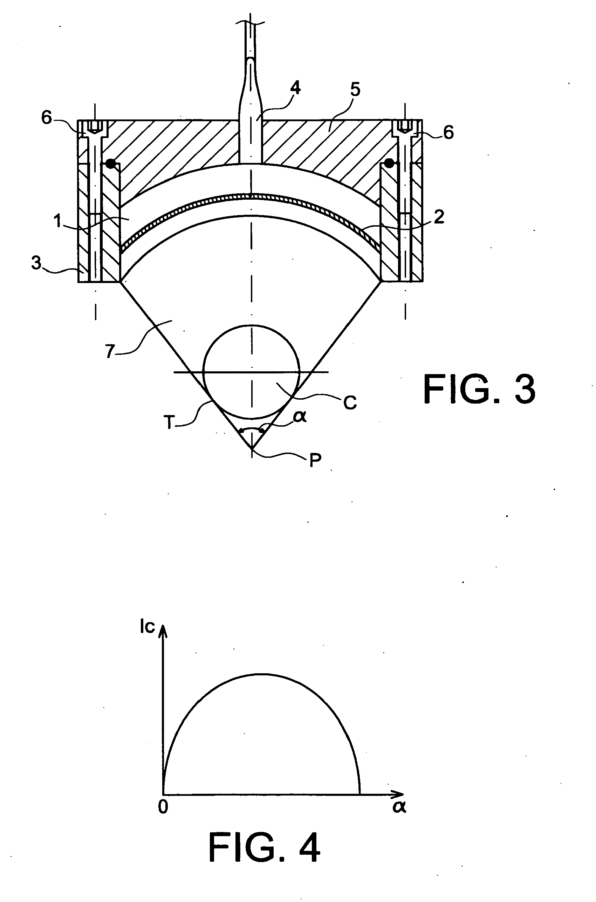

La figure 3 montre en détail la réalisation de cet ensemble, et constitué du couvercle 5, du détonateur 4, de l'explosif 1 et du revêtement 2. On note que des vis ou boulons 6 peuvent être utilisés pour fixer le couvercle 5 sur l'enveloppe de confinement 3.

On note que l'explosif 1 et le revêtement 2, bien qu'ayant une section en vé, telle que représentée sur la figure 2 qui est une coupe frontale, dans la dimension, c'est-à-dire perpendiculaire à la figure 3, ont une forme en arc de cercle, c'est-à-dire partiellement annulaire. Les deux centres de courbure de ces deux pièces sont communs et symbolisés par le point P. Quelque soit la longueur de la courbure de l'explosif et du revêtement 2, entre 20 à 180°, le point P représentant le centre de ces courbures doit être placé en dessous de l'endroit où l'on pense positionner la pièce de section circulaire C. De la sorte, lors de la détonation provoquée par le détonateur 4 et l'explosion de l'explosif 1 qui s'ensuit, le revêtement 2 est projeté en convergeant, tel que le représente la zone 7 convergeant vers le point P. En plaçant la pièce de section circulaire C à sectionner juste au-dessus du point P, on s'aperçoit que le jet de revêtement fondu à grande vitesse va recouvrir ou attaquer plus de la moitié du périmètre de la pièce de section circulaire C, surtout si cet angle de courbure est supérieur à 60°. En d'autres termes, la pièce de section circulaire C à découper est donc placée dans l'aire de découpe 7, de préférence juste au-dessus du point P de convergence du jet du revêtement 2, de manière à ce que celui-ci tangente des génératrices de la pièce de section circulaire C. Le point P est placé en fait juste en dessous des surfaces qui doivent supporter la pièce de section circulaire C. Ceci constitue une caractéristique primordiale du sectionneur.

En référence à la figure 4, la longueur de câble à traverser par le jet du revêtement de la charge creuse est donc variable selon l'endroit angulaire considéré de cette charge creuse. La courbe de la figure 4 montre en abscisse la position angulaire et en ordonnée la distance de câble à traverser, en fonction de l'angle. On constate que, pour un point du revêtement de la charge creuse placée aux extrémités de l'arc de cercle de la charge creuse, c'est-à-dire vers zéro et vers le signe alpha, la distance à traverser est faible. Par contre, la courbe dessinant un arc de cercle, la longueur de métal à traverser est maximale au centre de l'arc de cercle.

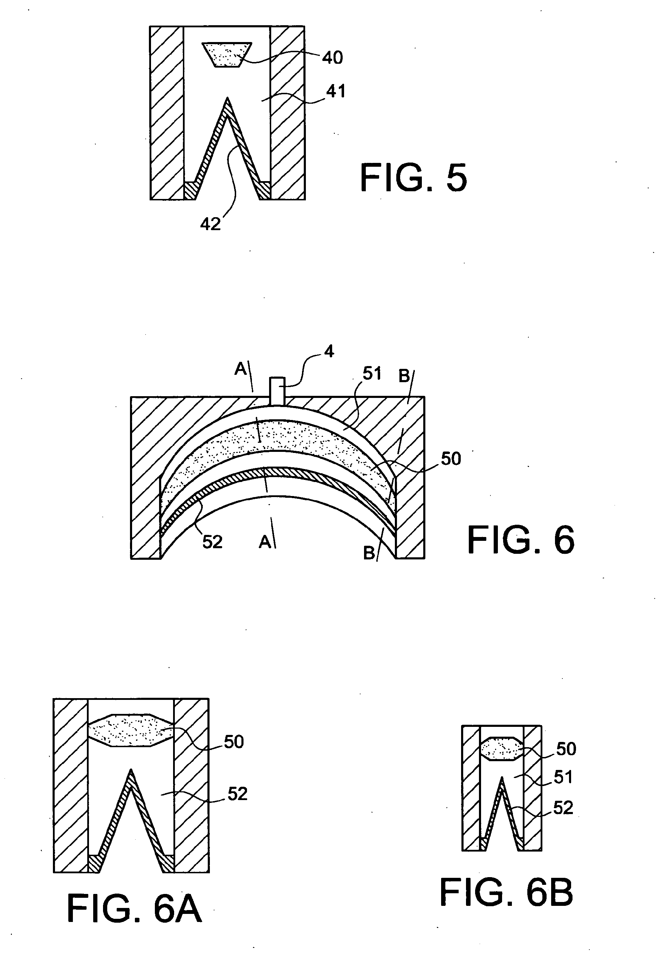

En référence à la figure 5, on se propose de placer, dans l'explosif 41 et de façon complètement noyée, un conformateur d'onde 40. Ce dernier est en matériau poreux et constitue un écran pour l'onde de détonation dans l'explosif.

Cette technologie est explicitée dans la demande de brevet français, publiée sous le numéro 2 549 949, dans le but que l'onde de détonation issue des moyens d'amorçage et de la partie d'explosif se trouvant entre ces derniers et le conformateur d'onde 40 prenne une légère avance par rapport à l'onde de détonation traversant le matériau poreux constituant ce conformateur d'onde 40. Pour arriver à ce résultat, ce dernier a une forme pour laquelle son épaisseur est maximale au centre, c'est-à-dire dans l'axe symétrique de la charge creuse et est moins importante aux extrémités, de manière à favoriser la progression de l'onde sur les trajectoires où elle a le plus de chemin à parcourir dans l'explosif.

La figure 5 montre un conformateur 40 en forme de trapèze, le petit côté du trapèze étant orienté en aval, c'est-à-dire vers le creux du vé, dessiné par le revêtement 42 placé sur l'explosif 41 de la charge creuse.

En référence aux figures 6A et 6B, le conformateur d'onde 50 peut présenter une autre forme, par exemple hexagonale, aplatie.

Dans le même but que celui exposé dans les paragraphes précédents, la section du conformateur d'onde 50 est de plus en plus fine en allant vers les extrémités, la section centrale, sur l'axe de symétrie de la charge creuse, étant la plus épaisse.

La figure 6 montre en coupe perpendiculaire par rapport aux figures 6A et 6B, l'ensemble de la charge creuse. On y retrouve le détonateur 4, en contact avec l'explosif 51 dans lequel est noyé le conformateur d'onde 50, un revêtement 52 étant placé en aval, sur l'explosif 51. Selon l'angle de l'arc de cercle de la charge explosive, le conformateur d'onde 50 a donc une section variable, cette section étant plus importante au centre et étant de plus en plus réduite à mesure qu'on s'éloigne à l'extrémité de l'arc de cercle.

Il en est de même pour l'ensemble de l'explosif 51, comme pour le revêtement 52.

On comprend ainsi que la section la plus importante du câble à couper étant sur l'axe de symétrie, la quantité de matériau projeté se trouve également au centre de l'arc de cercle, tout comme le maximum d'épaisseur du conformateur d'angle 50 et de revêtement 52. On permet ainsi de préserver l'environnement en adaptant la masse de l'explosif et les éléments de la charge creuse en fonction de l'épaisseur de la matière de câble à découper.

Les figures 6A et 6B sont deux coupes effectuées à des endroits différents de la figure 6. La coupe de la figure 6A est effectuée vers le centre de la charge creuse. Ainsi, on constate que l'épaisseur du conformateur d'onde 50 est un peu plus importante que vers les extrémités, comme le montre la figure 6B. Il en est de même pour la longueur d'explosif 51 et de l'épaisseur du revêtement 52. On obtient ainsi un jet de matière dû à la propulsion du revêtement 52, parfaitement centripète, en dotant tous les points du revêtement 52 d'une propulsion synchrone.

On note que l'enveloppe de confinement 3 est de préférence métallique et que l'explosif est un matériau préférentiel de densité élevée, à savoir supérieure à 1 g/cm³, ainsi, la vitesse de détonation peut être supérieure à 5 000 m/s.

La figure 4 illustre en vue tridimensionnelle, c'est-à-dire cavalière, l'application du sectionneur dans le cadre du sectionnement d'une pièce de section circulaire C immobile. Les éléments supplémentaires dans cette application sont l'utilisation d'un bâti fixe 18 équipé d'une charnière 19, de manière à pouvoir utiliser un bâti mobile 17 pivotant, au moyen de la charnière 19. Des orifices 20 latéraux, sont prévus pour le passage de la pièce de section circulaire C. Le sectionneur se complète alors de moyens de positionnement de cette pièce de section circulaire C, non représentés sur cette figure 4.

En effet, la figure 5 reprend ces éléments et montre un vé mobile de positionnement 21 est monté coulissant verticalement dans le bâti fixe 18, au moyen d'un ressort 22, dans le bâti fixe 18. Ce vé mobile coulissant 21 est destiné à recevoir la pièce de section circulaire C par en dessous. Un vé supérieur fixe par rapport au bâti mobile 17 est prévu pour être placé dessus la pièce de section circulaire C.

La figure 6 montre que le vé supérieur 23 est avantageusement constitué des deux extrémités latérales du bâti mobile 17. On constate également que l'ensemble du détonateur 14 et de l'ensemble explosif est placé au milieu et à l'intérieur de l'ensemble constitué par le bâti fixe 18 et le bâti mobile 17, juste au-dessus de la pièce de section circulaire C à sectionner. Sur cette figure 6, on distingue également les deux vés mobile 21 montés coulissant dans le bâti fixe 18 chacun au-dessus d'un ressort 22. En d'autres termes, les moyens de positionnement de la pièce de section circulaire C sont constitués d'un vé de positionnement, à l'intérieur duquel la pièce de section circulaire C est placée. Ainsi, en deux points T de sa circonférence, ce dernier tangente les surfaces des moyens de positionnement.

En fait, lors de la fermeture du bâti mobile 17, le câble C est emprisonné entre les deux vés, à savoir le vé mobile 21 et le vé supérieur 23, chaque ressort 22 permettant d'assurer la fixation complète du câble C dans les deux paires de vés, un mobile 21 et un supérieur 23, autorisant également un jeu dans le montage des deux bâtis 17 et 18.

Les deux parties du bâti, à savoir le bâti fixe 18 et le bâti mobile 17, peuvent être massifs et d'une structure composite.

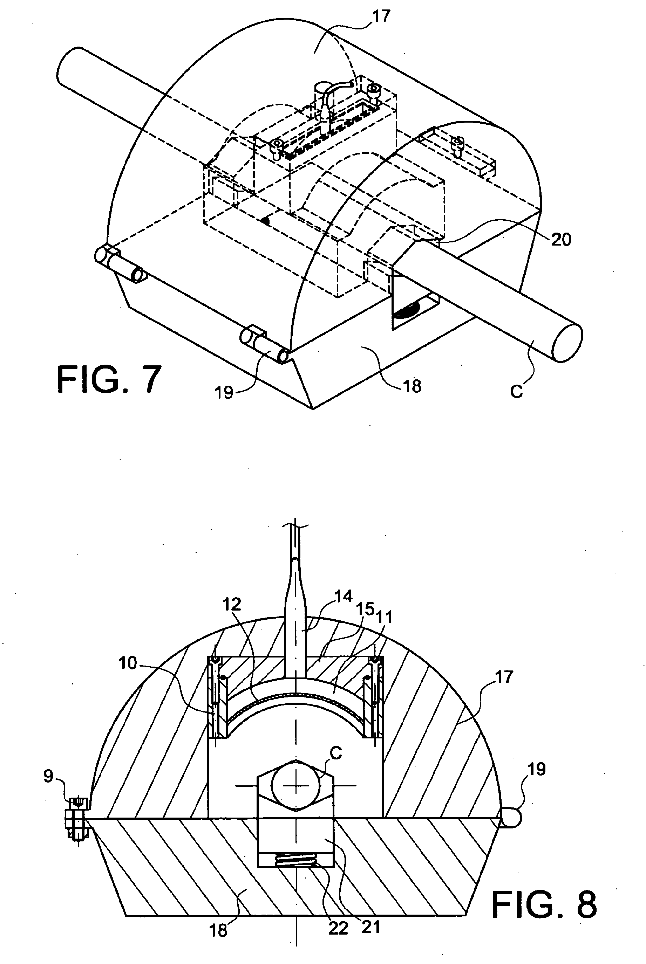

Les trois dernières figures, en l'occurrence les figures 7, 8 et 9, sont relatives à l'application du sectionneur au sectionnement d'un câble mobile selon l'invention. En conséquence, outre son positionnement dans l'espace par rapport aux éléments actifs du sectionneur, ce dernier doit assurer le déroulement longitudinal de la pièce de section circulaire C constituée par le câble. Dans ce but, on a décidé d'utiliser des poulies 39 montées tournantes autour d'un axe perpendiculaire au sens de déroulement du câble et de manière à pouvoir loger ce dernier dans les gorges de ces deux poulies 39. Entre celles-ci, se trouve l'ensemble du sectionneur relatif au sectionnement, à savoir l'enveloppe de confinement 33 contenant les éléments détonants, surmontée d'un couvercle 35, le tout étant placé dans un bâti supérieur 37. Un bâti fixe inférieur 38 complète l'ensemble. On notera un passage 36 dans le bâti fixe 38 permettant le passage du câble.

La figure 8 montre, comme les figures 2 et 5, en coupe frontale l'intérieur du sectionneur, notamment les éléments détonants, à savoir le revêtement 32, l'explosif 31, le détonateur 34 placé dans l'enceinte de confinement 33 surmonté du couvercle 35.

Les deux poulies 39 encadrent ces éléments, de manière à ce que la pièce de section circulaire C puisse être positionnée dessus, passant par le passage 36 dans le bâti fixe 38. Ainsi, les gorges des deux poulies de positionnement 39 constituent les surfaces des moyens de positionnement sur lesquelles la pièce de section circulaire C à sectionner est placée, de préférence par deux points tangents.

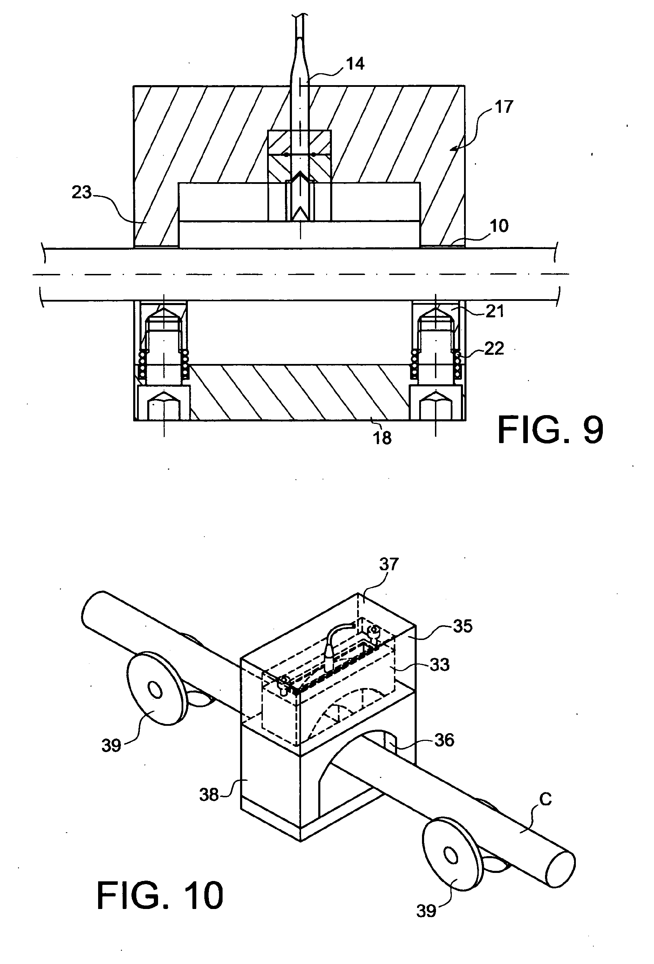

La figure 9, en coupe latérale, montre tous ces éléments et en particulier une poulie 39 sur laquelle est positionné la pièce de section circulaire C à sectionner. On notera que la position de poulies 39 correspond à celle définie à la figure 3, c'est-à-dire que le câble doit être positionné juste au-dessus du point de convergence du jet constituée par le revêtement, suite à l'explosion.

Les deux poulies 39 permettent donc de positionner la pièce de section circulaire C à un endroit optimal pour son sectionnement optimal, par rapport aux éléments opérationnels de section constituant le sectionneur pyrotechnique.

### Avantages du sectionneur selon l'invention

Tout d'abord, on signale que le sectionneur selon l'invention permet de découper un câble par déclenchement automatique ou manuel, lorsqu'une tension trop importante de ce câble peut entraîner des problèmes de sécurité pour les utilisateurs. C'est notamment le cas pour des chalutiers de pêche en action et dont le train de pêche peut s'accrocher sur un élément fixe du fond marin.

Il assure également la possibilité de couper un tel câble à un endroit précis, alors que la rupture mécanique de celui-ci à un autre endroit pourrait provoquer un mouvement violent du câble, occasionnant éventuellement ainsi de graves blessures sur des opérateurs présents à proximité, par exemple le sectionnement d'un membre. En conséquence, une difficulté réside dans la localisation précise du câble à découper, alors qu'il n'y a pas de tenue mécanique du câble dans l'espace, dans le cadre de son utilisation habituelle. Il s'ensuit une obligation de localiser le câble, concrétisée dans le sectionneur selon l'invention par des poulies ou autres éléments équivalents, tels que des roues en diabolo.

## Revendications

1. Sectionneur pyrotechnique de câble, au moyen d'une charge creuse (11, 31), ayant une section de structure transversale en vé et une forme partiellement annulaire, c'est-à-dire en arc de cercle, de manière à entourer partiellement la pièce de section circulaire (C) à sectionner, et comprenant :
- des moyens d'amorçage de la charge creuse (1, 11, 31) ; et
- des moyens de positionnement de la pièce de section circulaire à sectionner (C) par rapport à la charge creuse (1, 11, 31),
le point de focalisation du jet d'un revêtement (2, 12) de la charge creuse étant positionné juste en dessous du point le plus bas des surfaces des moyens de positionnement sur lequel est posé la pièce de section circulaire (C) à sectionner, de manière à être placé juste en dessous de la section droite de la pièce à section circulaire (C) à découper, la pièce de section circulaire (C) à sectionner étant mobile, la charge creuse étant placée au-dessus et entre deux poulies de positionnement (39) constituant les moyens de positionnement de la pièce de section circulaire (C) et destinées à recevoir ces derniers mobiles au défilement,
**caractérisé en ce qu'**il se complète d'un bâti comprenant :
- un bâti fixe (38) sur lequel sont montées les deux poulies de positionnement (39) ; et
- un bâti mobile (37) monté pivotant par rapport au bâti fixe (38) au moyen d'une charnière.

2. Sectionneur selon la revendication 1, **caractérisé en ce que** l'arc de cercle fourni par la charge creuse est compris entre 20 et 180°.

3. Sectionneur selon la revendication 1, **caractérisé en ce qu'**il comprend un conformateur (40, 50) placé dans la charge creuse (11), entre les moyens d'amorçage de la charge creuse et le revêtement (42, 52).

## Patentansprüche

1. Pyrotechnische Trennvorrichtung zum Durchtrennen von Kabeln mittels einer Hohlladung (11, 31), die einen V-förmigen Querschnitt und eine teilsweise ringförmige, d. h. kreisbogenförmige Form hat, so dass sie das zu durchtrennende, im Querschnitt kreisförmige Teil (C) teilweise umgibt, enthaltend:
- Mittel zum Zünden der Hohlladung (1, 11, 31), und
- Mittel zum Positionieren des zu durchtrennenden, im Querschnitt kreisförmigen Teils (C) in Bezug auf die Hohlladung (1, 11, 31),
wobei der Fokussierungspunkt des Strahls einer Auskleidung (2, 12) der Hohlladung knapp unter dem niedrigsten Punkt der Oberflächen der Positionierungsmittel positioniert wird, an welchem das zu durchtrennende, im Querschnitt kreisförmige Teil (C) aufliegt, so dass er knapp unter dem Querschnitt des zu zerschneidenden, im Querschnitt kreisförmigen Teils (C) liegt, wobei das zu durchtrennende, im Querschnitt kreisförmige Teil (C) beweglich ist, wobei die Hohlladung oberhalb und zwischen zwei Positionierungsrollen (39) angeordnet ist, welche Mittel zum Positionieren des im Querschnitt kreisförmigen Teils (C) bilden und dazu bestimmt sind, letztere im Ablauf beweglich aufzunehmen,
**dadurch gekennzeichnet, dass** sie mit einem Rahmenelement ergänzt wird, das aufweist:
- ein ortsfestes Rahmenteil (38), an dem die beiden Positionierungsrollen (39) gelagert sind, und
- ein bewegliches Rahmenteil (37), das bezüglich des ortsfesten Rahmenteiles (38) mittels eines Scharniers verschwenkbar gelagert ist.

2. Trennvorrichtung nach Anspruch 1, **dadurch gekennzeichnet, dass** der Kreisbogen, den die Hohlladung ergibt, zwischen 20 und 180° liegt.

3. Trennvorrichtung nach Anspruch 1, **dadurch gekennzeichnet, dass** sie einen Formgeber (40, 50) aufweist, der in der Hohlladung (11) zwischen den Zündmitteln zum Zünden der Hohlladung und der Auskleidung (42, 52) angeordnet ist.

## Claims

1. Pyrotechnical cable cutter, using a hollow charge (11, 31), having a V-shaped cross-section and a partially annular shape, that is arc-shaped, so as to partly enclose the cross-section portion (C) to be cut, and comprising:
- means for priming the hollow charge (1, 11, 31); and
- means for positioning the cross-section portion to be cut (C) relative to the hollow charge (1, 11, 31),
the focusing point of the jet for coating (2, 12) of the hollow charge being positioned immediately below the lowest point of the surfaces of the positioning means whereon is set the portion of circular cross-section (C) to be cut, in such a way as to be placed immediately under the straight section of the portion with circular cross-section (C) to be cut, with the circular cross-section portion (C) to be cut being mobile, the hollow charge being placed above and between two positioning pulleys (39) constituting the means for positioning of the circular cross-section portion (C) and intended to receive the latter mobile in scrolling,
**characterised in that** it is supplemented with a frame comprising:
- a fixed frame (38) whereon are mounted the two positioning pulleys (39); and
- a mobile frame (37) mounted pivoting in relation to the fixed frame (38) by means of a hinge.

2. Cutter according to claim 1, **characterised in that** the arc of circle provided by the hollow charge is between 20 and 180°.

3. Cutter according to claim 1, **characterised in that** it comprises a casing (40, 50) placed in the hollow charge (11), between the means for priming of the hollow charge and the coating (42, 52).
